# EUROPEAN PATENT APPLICATION

(11) **EP 4 339 158 A2**
(43) Date of publication of application: **20.03.2024**
(21) Application number: 23198606.8
(22) Date of filing: 26.12.2022
(51) Int. Cl.: C01D 15/06

(54) **METHOD FOR RECOVERING METALS FROM LITHIUM ION BATTERY WASTE**

(30) Priority: 05.01.2022 JP 2022000706; 29.06.2022 JP 2022104989
(62) Divisional of application: 22843890.9
(71) Applicant: JX Metals Corporation, Tokyo 105-8417 (JP)
(72) Inventor: ARIYOSHI, Hirotaka, Hitachi-shi, Ibaraki, 317-0056 (JP); ITO, Junichi, Tsuruga-shi, Fukui, 914-0027 (JP); ARAKAWA, Junichi, Hitachi-shi, Ibaraki, 317-0056 (JP); ABE, Hiroshi, Hitachi-shi, Ibaraki, 317-0056 (JP)
(74) Representative: Arnold & Siedsma

(57) **Abstract**

Provided is a method for efficiently recovering metals from lithium ion battery waste while reducing the use of sodium hydroxide as a pH adjuster.

A method for recovering metals from lithium ion battery waste includes wet processing of leaching metals containing lithium from lithium ion battery waste with an acid, and extracting the metals from the metal-containing solution in which the metals are dissolved, in which the lithium extracted in the wet processing is used as a pH adjuster used in the wet processing.

## Description

### Technical Field

The present description discloses a method for recovering metals from lithium ion battery waste.

### Background Art

In recent years, the recovery of valuable metals such as cobalt and nickel from lithium ion battery waste discarded due to product life, manufacturing defects, or other reasons has been widely studied from the viewpoint of effective utilization of resources.

In order to recover valuable metals from lithium ion battery waste, for example, lithium ion battery waste is subjected to predetermined dry processing such as roasting to obtain battery powder, which is then subjected to wet processing.

In the wet processing, specifically, metals such as cobalt, nickel, manganese, lithium, aluminum, and iron in battery powder are leached with an acid to obtain a metal-containing solution in which the metals are dissolved. Next, for example, as described in Patent Literature 1, aluminum, iron, manganese, and other elements dissolved in the metal-containing solution are sequentially or simultaneously removed by neutralization or solvent extraction. Thereafter, cobalt and nickel in the metal-containing solution are separated and concentrated by solvent extraction. After nickel is separated by extraction, a lithium-containing solution in which lithium is dissolved and remains is obtained. The lithium-containing solution thus obtained is subjected to repeated solvent extraction, for example, to concentrate lithium ions, and then carbonation is performed by adding a carbonate or blowing carbon dioxide gas to recover lithium ions contained in the lithium-containing solution as lithium carbonate.

### Citation List

### Patent Literature

PTL 1: Japanese Patent No. 6801090

### Summary of Invention

### Technical Problem

By the way, when recovering valuable metals from lithium ion battery waste, sodium hydroxide is mainly used as a pH adjuster to adjust the pH during solvent extraction, for example, and relatively large amounts of sodium may be dissolved in the lithium-containing solution. In the step of refining lithium carbonate, sodium is removed by separating it from lithium, but if the sodium content is high, removal is difficult and may require, for example, to repeatedly perform the step of washing lithium. This may result in a decrease in the lithium recovery rate and an increase in the recovery cost.

This description discloses a method for efficiently recovering metals from lithium ion battery waste while reducing the use of sodium hydroxide as a pH adjuster.

### Solution to Problem

The method for recovering metals from lithium ion battery waste disclosed herein includes wet processing in which metals including lithium are leached from lithium ion battery waste with an acid, and the metals are extracted from the metal-containing solution in which the metals are dissolved, and uses the lithium extracted in the wet processing as a pH adjuster in the wet processing.

### Advantageous Effects of Invention

The above-described method for recovering metals from lithium ion battery wastes can suppress the use of sodium hydroxide as a pH adjuster and efficiently recover metals from lithium ion battery waste.

### Brief Description of Drawings

Fig. 1 is a flowchart of wet processing included in the method for recovering metals from lithium ion battery waste according to an embodiment.
Fig. 2 is a flowchart of an example of dry processing that can be performed to obtain the battery powder of Fig. 1 from lithium ion battery waste.

### Description of Embodiments

The following is a detailed description of the above-described method for recovering metals from lithium ion battery waste.

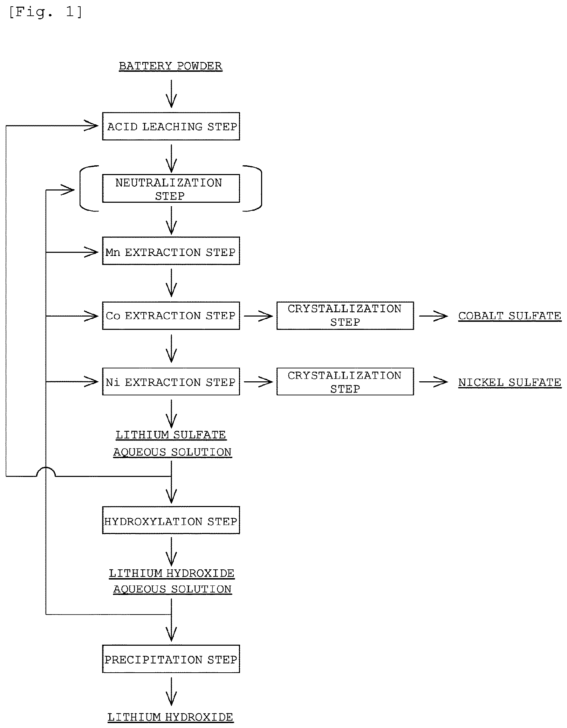

The metal recovery method according to an embodiment is a method for recovering metals from lithium ion battery waste, including wet processing in which metals containing lithium are leached from the lithium ion battery waste with an acid, and the metals are extracted from the metal-containing solution in which the metals are dissolved. The wet processing may include the steps illustrated in Fig. 1.

Here, lithium is extracted from the metal-containing solution by wet processing, and the lithium is used as a pH adjuster in the wet processing. This reduces the amount of sodium hydroxide conventionally used as a pH adjuster, or eliminates the need for sodium hydroxide. As a result, inclusion of impurity sodium is reduced, and metals can be efficiently recovered. In addition, using lithium extracted by wet processing as a pH adjuster can also reduce processing costs compared to using sodium hydroxide as a separate pH adjuster.

Preferably, lithium extracted in the wet processing is used as all alkaline pH adjusters used in the wet processing. It is preferable that all the alkaline pH adjusters used in the wet processing are sodium-free. In order to do so, it is desirable to minimize the loss of lithium as much as possible in the wet processing and maintain the lithium ion concentration in the solution at some high level. When the lithium ion concentration in the solution is high, for example, the yield when lithium is extracted in the precipitation and other steps described later can be increased.

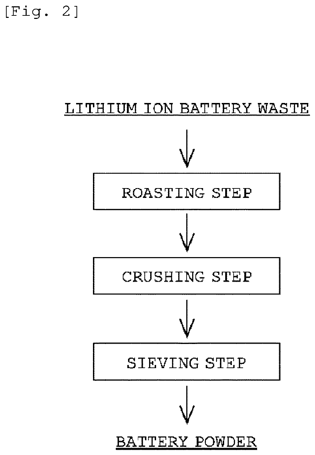

In many cases, before the wet processing, the lithium ion battery waste is subjected to dry processing as illustrated in Fig. 2 to obtain battery powder. The battery powder is then subjected to wet processing.

### (Lithium ion battery waste)

Lithium ion battery waste is lithium ion secondary batteries that can be used in mobile phones and other various electronic devices, and are discarded due to battery product life, manufacturing failure, or other reasons. Recovery of valuable metals such as cobalt and nickel from such lithium ion battery waste is preferable from the viewpoint of effective utilization of resources.

The lithium ion battery waste has an aluminum-containing case as an exterior that wraps around it. Examples of the case include those made solely of aluminum, and those including aluminum and steel, and aluminum laminate.

Lithium ion battery waste may also contain, within the case, a cathode active material including one single metal oxide selected from the group consisting of lithium, nickel, cobalt, and manganese, or two or more composite metal oxides, or an aluminum foil (cathode base material) coated and adhered with a cathode active material, for example by polyvinylidene fluoride (PVDF) or other organic binders. In addition, lithium ion battery waste may contain copper, iron, and the like.

Further, lithium ion battery waste typically contains an electrolyte within the case. For example, ethylene carbonate or diethyl carbonate may be used as an electrolyte.

### (Dry processing)

The above-described lithium ion battery waste may be subjected to roasting, crushing, and sieving steps as dry processing.

In the roasting step, the lithium ion battery waste is heated using a rotary kiln furnace or other heating equipment. In the roasting step, the lithium ion battery waste is preferably heated by, for example, holding it at a temperature from 450°C to 1000°C, preferably from 600°C to 800°C, for 0.5 hours to 4 hours.

The roasting step may be followed by a crushing step to crush the case of lithium ion battery waste using an impact or other crusher to take out the cathode and anode materials from it.

The crushing step is followed by a sifting step to sieve the lithium ion battery waste using a sieve with an appropriate mesh opening for the purpose of, for example, removing aluminum powder.

Powdered battery powder is obtained from the lithium ion battery waste by the dry processing described above. The battery powder is subjected to wet processing as described later to recover the metals contained in the battery powder.

### (Acid leaching step)

In the acid leaching step, metals including lithium contained in the lithium ion battery waste are leached with an acid by, for example, adding the battery powder to an acidic leaching solution such as sulfuric acid. As a result, a metal-containing solution in which the metal is dissolved is obtained.

In order to extract only lithium from the battery powder in advance, the battery powder may be brought into contact with water before leaching with an acid to leach the lithium in the battery powder into the water, and then the water leaching residue may be used for acid leaching. However, in this case, equipment for each of water leaching and acid leaching is required, and the processing time is increased by performing both, and the roasting conditions must be controlled to ensure effective leaching of lithium by water. Even with such management, the leaching rate of lithium by water may not be increased so much. Therefore, it is preferable that the battery powder obtained in the dry processing be subjected to acid leaching in the acid leaching step without water leaching, thus obtaining a metal-containing solution containing lithium ions. When water leaching is not performed, it is easier to maintain a high concentration of lithium ions in the solution during wet processing.

The acid leaching step may be performed using known methods or under known conditions. The pH is preferably from 0.0 to 2.0, and the oxidation-redox potential (ORP value using a silver/silver chloride potential as a reference) may be 0 mV or less. Here, as a diluent to adjust the pH of the acidic leaching solution, an extraction residue (for example, a lithium sulfate aqueous solution) from the nickel extraction step may be used, as described later. In this way, lithium ions are circulated in a series of steps in the wet processing, and the lithium ions in the solution can be concentrated in the step.

The metal-containing solution obtained in the acid leaching step contains lithium ions, cobalt ions, nickel ions, and manganese ions as metals dissolved from the battery powder. The metal-containing solution may further contain aluminum and iron ions, but is preferably nearly free of these metal ions. When aluminum ions and iron ions are contained to some extent, a neutralization step is required before the manganese extraction step to be described later, and in this neutralization step, lithium forms a composite compound with aluminum and precipitates, which may cause loss of lithium. When there are almost no aluminum or iron ions present in the metal-containing solution, the neutralization step can be omitted, as in this embodiment. More specifically, when the aluminum ion concentration of the metal-containing solution obtained in the acid leaching step is less than 0.5 g/L and the iron ion concentration is less than 0.001 g/L, it is preferable to perform one or more extraction steps (manganese extraction step in this embodiment) without performing the neutralization step after the acid leaching step, that is, to perform one or more extraction steps immediately after the acid leaching step. Even if aluminum ions are contained to some extent in the metal-containing solution obtained in the acid leaching step, they can be effectively removed together with manganese ions in the manganese extraction step described later. Details of the neutralization step are described later. The term "immediately after" as used herein and claims means that when the next step is performed after one step, no other step is interposed between these steps, and does not mean the length of time between one step and the next step. In the preferred embodiment described above, one or more extraction steps are performed after the acid leaching step without performing the neutralization step, and the time interval between the acid leaching step and the next one or more extraction steps may be any length. Transportation, standing, and other processing of the liquid between steps are not regarded as the steps described herein. Copper, which may be contained in the battery powder, can be removed by solid-liquid separation by leaving it in the acid leaching residue without dissolving it by acid leaching.

For example, in the metal-containing solution obtained in the acid leaching step, the lithium ion concentration may be from 3 g/L to 35 g/L, the cobalt ion concentration may be from 5 g/L to 30 g/L, the nickel ion concentration may be from 5 g/L to 30 g/L, the manganese ion concentration may be from 1 g/L to 10 g/L, the aluminum ion concentration may be from 0.3 g/L to 10 g/L, the iron ion concentration may be from 0.1 g/L to 5 g/L, and the copper ion concentration may be from 0.001 g/L to 0.05 g/L. In the metal-containing solution obtained in the acid leaching step, the aluminum ion concentration may be from 0.1 g/L to 10 g/L and the iron ion concentration may be from 0.0001 g/L to 5 g/L.

### (Manganese extraction step)

The metal-containing solution obtained in the acid leaching step may be subjected to the neutralization step described later as necessary, followed by the manganese extraction step to separate manganese ions from the metal-containing solution by solvent extraction.

The manganese extraction step preferably uses a solvent containing a phosphate extractant. Examples of the phosphate extractant include di-2-ethylhexyl phosphoric acid (trade name: D2EHPA or DP8R). The extractant is diluted with a hydrocarbon organic solvent such as an aromatic solvent, a paraffinic solvent, or a naphthenic solvent so as to have a concentration of 10 vol% to 30 vol%, and this may be used as a solvent.

In the solvent extraction of the manganese extraction step, the equilibrium pH is preferably from 2.3 to 3.5, and more preferably from 2.5 to 3.0. The alkaline or other pH adjuster used here is lithium, more specifically lithium hydroxide aqueous solution, which is extracted as described later (see Fig. 1). The use of lithium extracted by the wet processing as a pH adjuster, when sodium hydroxide is used as a pH adjuster, can reduce residual sodium in the extraction residue after the nickel extraction step described later and the inclusion of impurity sodium in the lithium hydroxide aqueous solution to be generated from the extraction residue. Extraction here is preferably performed in a multistage, counter-current extraction in which the flow directions of the aqueous phase and solvent to be used for each extraction are opposite to each other. This will suppress the extraction of cobalt ions, nickel ions, and lithium ions, and increase the extraction rate of manganese ions.

Since the solvent after manganese ion extraction may contain cobalt ions, nickel ions, and lithium ions, these ions that may be contained in the solvent are extracted into the aqueous phase by scrubbing, back-extraction, and scavenging. The scrubbing solution may be, for example, an acidic sulfuric acid solution having a pH of from 2.0 to 3.0. The back-extraction liquid may be, for example, an acidic sulfuric acid solution having a pH of from 0.0 to 1.0. The post-scrubbing solution, back-extracted solution, and post-scavenging solution is preferably used in the manganese extraction step (for example, by mixing the post-scrubbing solution with the metal-containing solution and using it as a pre-extraction solution for solvent extraction in the manganese extraction step, by using the back-extracted solution for scrubbing in the manganese extraction step, or by using the post-scavenging solution as a back-extraction liquid in the manganese extraction step). As a result, cobalt ions, nickel ions, and lithium ions can be circulated or remained in the steps without loss. However, when the solvent after manganese ion extraction does not contain cobalt ions, nickel ions, or lithium ions, scrubbing, back-extraction, or scavenging need not be performed.

### (Cobalt extraction step and crystallization step)

In the cobalt extraction step, cobalt ions are separated by solvent extraction from the metal-containing solution as an extraction residue obtained after manganese ions are extracted in the manganese extraction step.

The solvent used here is preferably a solvent containing a phosphonate ester extractant. Among them, 2-ethylhexyl phosphonate 2-ethylhexyl (trade name: PC-88A, Ionquest 801) is particularly suitable from the viewpoint of separation efficiency of nickel and cobalt. The extractant is diluted with a hydrocarbon organic solvent such as an aromatic solvent, a paraffinic solvent, or a naphthenic solvent so as to have a concentration of 10 vol% to 30 vol%, and this may be used as a solvent.

When cobalt ions are extracted, the equilibrium pH during extraction can preferably be from 5.0 to 6.0, more preferably from 5.0 to 5.5, by adjusting the pH with a pH adjuster such as a lithium hydroxide aqueous solution containing lithium extracted in the wet processing. When the pH is less than 5.0, cobalt ions may not be sufficiently extracted into the solvent. As a result, cobalt ions in the cobalt-containing solution can be extracted into the solvent, but along with it, some nickel, lithium, and other ions to be impurity ions may also be extracted in this step as described later. The extraction of cobalt ions is also preferably performed in a multistage, counter-current extraction in which the flow directions of the aqueous phase and solvent to be used for each extraction are opposite to each other. This will suppress the extraction of nickel ions and lithium ions, and increase the extraction rate of cobalt ions.

Next, if necessary, the solvent after cobalt ion extraction may be scrubbed one or more times with a scrubbing solution to remove impurities such as nickel ions that may be contained in the solvent. The scrubbing solution may be, for example, an acidic sulfuric acid solution having a pH of from 3.5 to 5.5. Here, the post-scrubbing solution may contain nickel ions and lithium ions. Therefore, it is desirable to use a part or all of the post-scrubbing solution for solvent extraction in the cobalt extraction step (that is, a part or all of the post-scrubbing solution is mixed with the metal-containing solution and the mixture is used as the pre-extraction solution for solvent extraction in the cobalt extraction step). As a result, nickel ions and lithium ions can be circulated or remained in the steps without loss. However, when the solvent after cobalt ion extraction does not contain nickel ions or lithium ions, the scrubbing step need not be performed.

Thereafter, back-extraction is performed on the solvent after cobalt ion extraction. The back-extraction liquid used for back-extraction may be any inorganic acid such as sulfuric acid, hydrochloric acid, or nitric acid, but is preferably sulfuric acid when a sulfate is obtained in the crystallization step described later. Here, the pH conditions are such that as much as possible all cobalt ions are extracted from the organic phase (solvent) into the aqueous phase. Specifically, the pH is preferably from 2.0 to 4.0, and more preferably from 2.5 to 3.5. The O/A ratio and number of times may be determined as appropriate. The liquid temperature may be room temperature, but preferably from 0°C to 40°C.

The back-extracted solution obtained in the cobalt extraction step is subjected to a crystallization step. In the crystallization step after the cobalt extraction step, cobalt ions crystallize to obtain cobalt sulfate. In the crystallization step, the back-extracted solution is concentrated by heating to, for example, 40°C to 120°C. This causes the cobalt ions to crystallize as cobalt sulfate. The cobalt sulfate thus produced has a nickel content of preferably 5 ppm by mass or less, so nickel is sufficiently removed. Therefore, it can be effectively used as a raw material for the manufacture of lithium ion secondary batteries and other batteries. Here, the post-crystallization solution may contain uncrystallized cobalt and lithium ions. Therefore, the post-crystallization solution is preferably used for another crystallization by mixing it with the back-extracted solution in the crystallization step, or for adjusting the cobalt concentration of the scrubbing solution in the cobalt extraction step, or even for solvent extraction in the cobalt extraction step. By using it repeatedly in the steps, cobalt and lithium ions can be circulated or retained and concentrated in the steps without loss of cobalt and lithium ions.

### (Nickel extraction step and crystallization step)

After cobalt ions are separated from the metal-containing solution in the cobalt extraction step, the metal-containing solution as the extraction residue from the cobalt extraction step is subjected to a nickel extraction step.

In the nickel extraction step, nickel ions are separated from the metal-containing solution preferably using a carboxylic acid extractant. Examples of the carboxylic acid extractant include neodecanoic acid and naphthenic acid, and among them, neodecanoic acid is preferable due to its ability to extract nickel ions. The extractant is diluted with a hydrocarbon organic solvent such as an aromatic solvent, a paraffinic solvent, or a naphthenic solvent so as to have a concentration of 10 vol% to 30 vol%, and this may be used as a solvent.

When extracting nickel ions in the nickel extraction step, the equilibrium pH is preferably from 6.0 to 8.0, and more preferably from 6.8 to 7.2. The pH adjuster used to adjust the pH here is also a lithium hydroxide aqueous solution that is extracted as described later. Also in the nickel extraction step, as in the cobalt extraction step described above, extraction is preferably performed in a multistage, counter-current extraction. This will suppress the extraction of lithium ions, and increase the extraction rate of nickel ions.

All alkaline pH adjusters used in the wet processing, including the manganese extraction step, cobalt extraction step, and nickel extraction step, preferably contain lithium extracted in the wet processing and is preferably sodium-free. This eliminates the need for sodium hydroxide as an alkaline pH adjuster and sufficiently reduces impurity sodium ions in the lithium hydroxide aqueous solution obtained in the hydroxylation step described later.

Next, if necessary, the solvent after nickel ion extraction may be scrubbed one or more times with a scrubbing solution to remove impurities such as lithium and sodium ions that may be contained in the solvent. The scrubbing solution may be, for example, an acidic sulfuric acid solution having a pH of from 5.0 to 6.0. Here, the post-scrubbing solution may contain lithium ions. Therefore, it is desirable to use a part or all of the post-scrubbing solution for solvent extraction in the nickel extraction step (that is, a part or all of the post-scrubbing solution is mixed with the metal-containing solution and the mixture is used as the pre-extraction solution for solvent extraction in the nickel extraction step). As a result, lithium ions can be circulated or remained in the steps without loss. However, when the solvent after nickel ion extraction does not contain lithium ions, the scrubbing step need not be performed.

Next, the solvent is back-extracted using a back-extraction liquid such as sulfuric acid, hydrochloric acid, or nitric acid. When the crystallization step is performed thereafter, sulfuric acid is particularly preferable. The pH is preferably from 1.0 to 3.0, and more preferably from 1.5 to 2.5. The O/A ratio and the number of times may be appropriately determined, but the O/A ratio is from 5 to 1, and more preferably from 4 to 2.

When a nickel sulfate solution is obtained by back-extraction, it may be electrolyzed and dissolved as necessary, then heated to 40°C to 120°C in the crystallization step to crystallize the nickel ions as nickel sulfate. As a result, nickel sulfate is obtained. Here, the post-crystallization solution may contain uncrystallized nickel ions and lithium ions. Therefore, the post-crystallization solution is preferably used for another crystallization by mixing it with the back-extracted solution in the crystallization step, or for adjusting the nickel ion concentration of the scrubbing solution in the nickel extraction step, or even for solvent extraction in the nickel extraction step. By using it repeatedly in the steps, nickel ions and lithium ions can be circulated or retained and concentrated in the steps without loss of nickel ions and lithium ions.

### (Hydroxylation step)

The extraction residue obtained after the nickel extraction step contains substantially only lithium ions as a result of the separation of each of the manganese, cobalt, and nickel ions in each of the extraction steps described above. From this extraction residue, lithium for the pH adjuster used in the wet processing can be extracted. More specifically, when the extraction residue after the nickel extraction step is a lithium sulfate aqueous solution, a hydroxylation step may be performed to prepare a lithium hydroxide aqueous solution from the lithium sulfate aqueous solution.

Various methods may be used to obtain a lithium hydroxide aqueous solution from a lithium sulfate aqueous solution.

For example, first, a carbonate is added to the lithium sulfate aqueous solution or carbon dioxide gas is blown into the aqueous solution to obtain a lithium carbonate aqueous solution. Thereafter, in the so-called chemical conversion method, a lithium hydroxide aqueous solution can be generated by adding calcium hydroxide to a lithium carbonate aqueous solution under the reaction formula Li₂CO₃ + Ca(OH)₂ → 2LiOH + CaCO₃. Calcium ions that may remain in the solution can be removed by a cation exchange resin or chelating resin.

Alternatively, a lithium hydroxide aqueous solution can be obtained by adding barium hydroxide to a lithium sulfate aqueous solution under the reaction formula Li₂SO₄ + Ba(OH)₂ → 2LiOH + BaSO₄. Barium that may be dissolved in the liquid at this time can be separated and removed using a cation exchange resin, a chelating resin, or the like.

Alternatively, when the so-called electrolysis method is used, a lithium hydroxide aqueous solution can be generated on the cathode side by supplying a lithium sulfate aqueous solution to the anode side for electrolysis in an electrolysis tank with a cation exchange membrane that separates the anode and cathode sides.

As shown in Fig. 1, the lithium hydroxide aqueous solution thus obtained can be effectively used as an alkaline pH adjuster in each of the manganese extraction step, cobalt extraction step, and nickel extraction step, as well as a pH adjuster (neutralizer) in the neutralization step described later.

By the way, it is preferable to use a part of the lithium sulfate aqueous solution for the hydroxylation step and the remaining part (the remainder) as at least a part of the acid in the acid leaching step, as shown in Fig. 1. In this case, by using a part of the lithium sulfate aqueous solution in the acid leaching step, the lithium concentration in the series of steps can be increased, and by obtaining the lithium hydroxide aqueous solution in the hydroxylation step only to the extent necessary for the pH adjuster and others, the cost for the overall process including lithium hydroxide production can be reduced.

### (Precipitation step)

When a series of steps including acid leaching, manganese extraction, cobalt extraction, nickel extraction, and hydroxylation steps are repeated several times, a part of the lithium sulfate aqueous solution is sent to the acid leaching step as described above, and the lithium contained therein may be slightly separated in each extraction step. When the series of steps are repeated, each time new lithium ion battery waste is fed into the series of steps, the amount of lithium ions entering the present step from the previous step and the amount of lithium ions moving from the present step to the next step in each step almost match, and the amount of increase of lithium ions in each step becomes saturated and a certain amount of lithium ions is retained in each step. In that case, most of the lithium ions derived from the lithium hydroxide aqueous solution used in each step as a pH adjuster and from the lithium sulfate aqueous solution used in the acid leaching step are again contained in the lithium sulfate aqueous solution after the nickel extraction step. That is, at least a part of the lithium is circulated in the solution in a series of steps.

Then, when the series of steps are repeated, the lithium ion concentration in the solution such as a lithium sulfate aqueous solution can gradually increase as new lithium ion battery waste is fed into the series of steps each time.

When the lithium ion concentration in the solution increases as described above, a precipitation step may be further performed after the hydroxylation step to precipitate lithium hydroxide from a part of the lithium hydroxide aqueous solution, depending on the lithium ion concentration in the solution. This allows recovery of lithium hydroxide. Conventionally, the lithium ion concentration in the extraction residue containing lithium ions after the nickel extraction step was low, so it was necessary to perform a lithium concentration step to increase the lithium ion concentration in the solution. In the present embodiment, the lithium concentration step is not necessary, and a highly concentrated lithium aqueous solution can be obtained without a complicated step, thereby reducing the loss of lithium in the step and the production cost.

In the precipitation step, precipitation operations such as heat concentration or vacuum distillation may be performed to precipitate lithium hydroxide. In the case of heat concentration, the higher the temperature during precipitation, the faster the processing can proceed. However, after precipitation, drying of the precipitate is preferably performed at a temperature lower than 60°C where the crystalline water is not desorbed. This is because once the crystalline water is desorbed, it becomes anhydrous lithium hydroxide, which is difficult to handle due to its deliquescency.

The lithium hydroxide may then be pulverized or otherwise treated to adjust it to the required physical properties.

### (Neutralization step)

When the metal-containing solution obtained in the acid leaching step contains iron or aluminum, it is desirable to perform the neutralization step to separate at least a part of aluminum and/or iron therefrom. The neutralization step may include an aluminum removal step and/or an iron removal step.

For example, when the aluminum ion concentration is 0.5 g/L or more and the iron ion concentration is 0.001 g/L or more, there are concerns that aluminum ions cannot be sufficiently removed in the manganese extraction step described above and that the extraction capacity of the solvent may decrease due to residual accumulation of extracted iron ions in the solvent. Therefore, it is desirable to perform the neutralization step. More specifically, when the aluminum ion concentration is less than 0.5 g/L and the iron ion concentration is 0.001 g/L or more, in the neutralization step, the iron removal step may performed without performing the aluminum removal step (that is, the iron removal step is performed immediately after the acid leaching step), and the above-described extraction step may be performed after the iron removal step. When the aluminum ion concentration is 0.5 g/L or more and the iron ion concentration is less than 0.001 g/L, the aluminum removal step may be performed and the iron removal step may be omitted. When the aluminum ion concentration is 0.5 g/L or more and the iron ion concentration is 0.001 g/L or more, both the aluminum removal and iron removal steps may be performed.

In the aluminum removal step, aluminum ions can be precipitated by first adding an alkali to achieve a pH of 4.0 to 6.0 and an oxidation-reduction potential (ORP value using a silver/silver chloride potential as a reference) of -500 mV to 100 mV. The precipitated aluminum can be removed by solid-liquid separation using a filter press or thickener. However, when the metal-containing solution contains a certain amount of lithium ions, the aluminum ions form complex oxides or complex hydroxides such as LiAlOz and LiAl₂(OH)₇ with the lithium ions during precipitation, causing the loss of lithium. From the viewpoint of reducing the loss of lithium, it is preferable to set the aluminum ion concentration of the metal-containing solution obtained in the acid leaching step to less than 0.5 g/L and omit the aluminum removal step.

In the iron removal step, an oxidizer is added and the pH can be adjusted to a range of 3.0 to 4.0. As a result, iron in the solution is oxidized from divalent to trivalent, and trivalent iron can be precipitated as an oxide or hydroxide (for example, Fe(OH)₃) at a lower pH than that of divalent iron. Iron precipitated in the iron removal step can be removed by solid-liquid separation. The iron ion concentration after the iron removal step may be less than 0.001 g/L.

In order to precipitate iron ions in the iron removal step, the ORP value during oxidation is preferably from 300 mV to 900 mV. The oxidizer is not particularly limited as long as it can oxidize iron, but is preferably manganese dioxide, a cathode active material, and/or a manganesecontaining leaching residue obtained by leaching the cathode active material. The manganesecontaining leaching residue obtained by leaching the cathode active material with an acid or the like may contain manganese dioxide. When the cathode active material or the like is used as an oxidizer, a precipitation reaction occurs in which manganese dissolved in the solution becomes manganese dioxide, and thus the precipitated manganese can be removed together with iron.

After the addition of the oxidizer, the pH may be adjusted to the above range. If the pH is too low, iron ions cannot be sufficiently precipitated, while if the pH is too high, other metal ions such as cobalt ions may also be precipitated. The alkaline or other pH adjuster used here is lithium, more specifically a lithium hydroxide aqueous solution, which is extracted as described above.

As described above, the use of lithium extracted in the wet processing as a pH adjuster reduces the use of sodium hydroxide as a pH adjuster and allows efficient recovery of metals from lithium ion battery waste.

### Embodiments

The invention is further illustrated herein below by means of the following non-limiting embodiments.
1. A method for recovering metals from lithium ion battery waste, comprising
   wet processing of leaching metals containing lithium from lithium ion battery waste with an acid, and extracting the metals from a metal-containing solution in which the metals are dissolved,
   wherein the lithium extracted in the wet processing is used as a pH adjuster used in the wet processing.
2. The metal recovery method according to embodiment 1, wherein the lithium is extracted as a lithium hydroxide aqueous solution in the wet processing, and the lithium hydroxide aqueous solution is used as the pH adjuster.
3. The metal recovery method according to embodiment 1 or 2, wherein lithium extracted in the wet processing is used as all of the alkaline pH adjusters used in the wet processing.
4. The metal recovery method according to embodiment 1 or 2, wherein all alkaline pH adjusters used in the wet processing are sodium-free.
5. The metal recovery method according to embodiment 1 or 2,
   wherein the wet processing comprises an acid leaching step of leaching metals comprising lithium from the lithium ion battery waste with an acid to obtain the metal-containing solution, and one or more extraction steps of separating the metals from the metal-containing solution by solvent extraction,
   wherein lithium extracted in the wet processing is used as a pH adjuster used in at least one of the extraction steps.
6. The metal recovery method according to embodiment 5,
   wherein the metals comprise cobalt, nickel, and manganese,
   the extraction step includes a manganese extraction step, a cobalt extraction step, and a nickel extraction step in this order, and
   lithium used as a pH adjuster used in the wet processing is extracted from the extraction residue obtained in the nickel extraction step.
7. The metal recovery method according to embodiment 6,
   wherein the extraction residue is a lithium sulfate aqueous solution, and
   the nickel extraction step is followed by a hydroxylation step to obtain a lithium hydroxide aqueous solution from the lithium sulfate aqueous solution.
8. The metal recovery method according to embodiment 7, wherein a part of the lithium sulfate aqueous solution is used in the hydroxylation step, and the remainder is used as at least a part of the acid in the acid leaching step.
9. The metal recovery method according to embodiment 7, wherein a series of steps including an acid leaching step, a manganese extraction step, a cobalt extraction step, a nickel extraction step, and a hydroxylation step is repeatedly performed over a plurality of times, and at least a part of the lithium is circulated in the solution in the series of steps.
10. The metal recovery method according to embodiment 9,
   wherein the repetition of the series of steps feeds metals in the lithium ion battery waste into the series of steps, which in turn increases the lithium ion concentration in the solution, and
   the hydroxylation step is followed by a precipitation step to precipitate lithium hydroxide from a part of the lithium hydroxide aqueous solution according to the lithium ion concentration in the solution.
11. The metal recovery method according to embodiment 6,
   wherein the cobalt extraction step and the nickel extraction step each comprise extracting metal ions in the metal-containing solution into a solvent and back-extracting the metal ions in the solvent with a sulfuric acid solution, and
   the cobalt extraction step and the nickel extraction step are each followed by a crystallization step to crystallize the metal ions in the back-extracted solution to obtain a sulfate.
12. The metal recovery method according to embodiment 1 or 2,
   wherein the wet processing is preceded by dry processing to obtain battery powder by processing comprising roasting of lithium ion battery waste, and
   the battery powder is subjected to acid leaching in the wet processing to obtain the metal-containing solution.

## Claims

1. A method for recovering metals from lithium ion battery waste, comprising
wet processing of leaching metals containing lithium from lithium ion battery waste with an acid, and extracting the metals from a metal-containing solution in which the metals are dissolved;
wherein the lithium extracted in the wet processing is used as a pH adjuster used in the wet processing;
wherein the wet processing comprises an acid leaching step of leaching metals comprising lithium from the lithium ion battery waste with an acid to obtain the metal-containing solution, and one or more extraction steps of separating the metals from the metal-containing solution by solvent extraction, to obtain an extraction residue containing lithium,
and after the one or more extraction steps, a hydroxylation step to obtain a lithium hydroxide aqueous solution from the extraction residue containing lithium;
wherein lithium extracted in the wet processing is used as a pH adjuster used in at least one of the extraction steps; and
wherein a part of the extraction residue is used in the hydroxylation step, and the remainder is used as at least a part of the acid in the acid leaching step.

2. The metal recovery method according to claim 1, wherein the lithium is extracted as a lithium hydroxide aqueous solution in the wet processing, and the lithium hydroxide aqueous solution is used as the pH adjuster.

3. The metal recovery method according to claim 1 or 2, wherein lithium extracted in the wet processing is used as all of the alkaline pH adjusters used in the wet processing.

4. The metal recovery method according to claim 1 or 2, wherein all alkaline pH adjusters used in the wet processing are sodium-free.

5. The metal recovery method according to claim 1,
wherein the metals comprise cobalt, nickel, and manganese;
wherein the extraction step includes a manganese extraction step, a cobalt extraction step, and a nickel extraction step in this order; and
wherein the extraction residue is obtained in the nickel extraction step.

6. The metal recovery method according to claim 5, wherein the lithium used as a pH adjuster used in the wet processing is extracted from the extraction residue obtained in the nickel extraction step.

7. The metal recovery method according to claim 5 or 6,
wherein the extraction residue obtained in the nickel extraction step is a lithium sulfate aqueous solution; and
the nickel extraction step is followed by a hydroxylation step to obtain a lithium hydroxide aqueous solution from the lithium sulfate aqueous solution.

8. The metal recovery method according to claim 7, wherein the lithium hydroxide aqueous solution is prepared from the lithium sulfate aqueous solution by electrolysis.

9. The metal recovery method according to claim 7 or 8, wherein the lithium hydroxide aqueous solution is used as the pH adjuster.

10. The metal recovery method according to any one of claims 7 to 9, wherein the lithium hydroxide aqueous solution is used as all of the alkaline pH adjusters used in the wet processing.

11. The metal recovery method according to any one of claims 5 to 10, wherein a series of steps including an acid leaching step, a manganese extraction step, a cobalt extraction step, a nickel extraction step, and a hydroxylation step is repeatedly performed over a plurality of times, and at least a part of the lithium is circulated in the solution in the series of steps.

12. The metal recovery method according to claim 11,
wherein the repetition of the series of steps feeds metals in the lithium ion battery waste into the series of steps, which in turn increases the lithium ion concentration in the solution; and
the hydroxylation step is followed by a precipitation step to precipitate lithium hydroxide from a part of the lithium hydroxide aqueous solution according to the lithium ion concentration in the solution.

13. The metal recovery method according any one of claim 5 to 11,
wherein the cobalt extraction step and the nickel extraction step each comprise extracting metal ions in the metal-containing solution into a solvent and back-extracting the metal ions in the solvent with a sulfuric acid solution; and
the cobalt extraction step and the nickel extraction step are each followed by a crystallization step to crystallize the metal ions in the back-extracted solution to obtain a sulfate.

14. The metal recovery method according to any one of claims 1 to 13,
wherein the wet processing is preceded by dry processing to obtain battery powder by processing comprising roasting of lithium ion battery waste; and
the battery powder is subjected to acid leaching in the wet processing to obtain the metal-containing solution.
